# EUROPÄISCHE PATENTSCHRIFT

(11) **EP 4 647 706 B1**
(45) Veröffentlichungstag und Bekanntmachung des Hinweises auf die Patenterteilung: **04.11.2026**
(21) Anmeldenummer: 25170034.0
(22) Anmeldetag: 11.04.2025
(51) Int. Cl.: F28F 9/02, F16L 39/00, H01M 10/625, H01M 10/6567, H01M 10/6568, F28F 3/12, H01M 10/613

(54) **KONNEKTORBLOCK FÜR EINE FLUIDLEITUNGSSTRUKTUR SOWIE FLUIDLEITUNGSSTRUKTUR EINES MODULAREN TEMPERIERSYSTEMS**
CONNECTOR BLOCK FOR A FLUID LINE STRUCTURE AND FLUID LINE STRUCTURE OF A MODULAR TEMPERATURE CONTROL SYSTEM
BLOC DE RACCORD POUR UNE STRUCTURE DE CONDUITE DE FLUIDE ET STRUCTURE DE CONDUITE DE FLUIDE D'UN SYSTÈME DE RÉGULATION DE TEMPÉRATURE MODULAIRE

(30) Priorität: 08.05.2024 DE 102024112888
(43) Veröffentlichungstag der Anmeldung: 12.11.2025
(73) Patentinhaber: Voss Automotive GmbH, 51688 Wipperfürth (DE)
(72) Erfinder: AKCAN, Ali, 51688 Wipperfürth (DE)
(74) Vertreter: Dr. Solf & Zapf Patent- und Rechtsanwalts PartG mbB

(56) Entgegenhaltungen:
- EP-A1- 4 332 421
- DE-A1- 102021 124 621
- DE-A1- 102022 211 533
- US-A1- 2023 402 679

## Beschreibung

Die vorliegende Erfindung betrifft einen Konnektorblock für eine Fluidleitungsstruktur sowie eine Fluidleitungsstruktur für ein modulares Temperiersystem eines Energiespeichers, insbesondere für ein Kühlsystem für Fahrzeugbatterien, mit mindestens einer Sammelleitung für das Fluid sowie mit mindestens einer ersten Abzweigleitung und mit mindestens einer zweiten Abzweigleitung zu einem fluidführenden hohlen plattenförmigen Kühlelement sowie mit mindestens einer ersten und einer zweiten Verteilerschnittstelle zum jeweiligen Anschluss der Abzweigleitungen an die Sammelleitung. Des Weiteren betrifft die vorliegende Erfindung ein Temperiersystem mit einem zu temperierenden Energiespeicher, wie insbesondere ein Kühlsystem für Fahrzeugbatterien, mit einer derartigen Fluidleitungsstruktur.

Batterien bzw. Akkuzellen von Elektro- und Hybridfahrzeugen müssen in einem definierten Temperaturfenster betrieben werden, um deren Haltbarkeit zu gewährleisten und eine Schädigung zu vermeiden. Insbesondere sollte sich ein Batteriemodul nicht über 40 °C erwärmen. Dazu weisen aus dem Stand der Technik bekannte Temperiersysteme durchströmbare Kühlplatten, insbesondere Aluminium-Kühlplatten, als fluidführende hohle plattenförmige Kühlelemente auf, an denen die Akkuzellen positioniert sind. Die Größe und Anzahl der Kühlplatten ist abhängig von der Geometrie und Anzahl der Akkuzellen.

Um eine homogene Temperierung zu ermöglichen, werden die Kühlplatten typischerweise einzeln mit einem Temperiermedium, das beispielsweise aus einem Gemisch aus Wasser und Glykol bestehen kann, durchströmt. Die Zu- und Abläufe der Kühlplatten werden jeweils über Abzweigleitungen einer Sammelleitung von dieser Sammelleitung zu den Kühlplatten geführt bzw. in die Sammelleitung zurückgeführt.

Aus dem Stand der Technik bekannte Temperiersysteme, wie eines beispielsweise in der EP 3 336 958 B1 beschrieben ist, werden üblicherweise unter Verwendung einer Vielzahl von einzelnen Verbindern und Rohrstücken montiert. Dabei kann die Montage z. B. durch ein Aufdornen oder Zusammenstecken erfolgen. Neben der Verteilung des Temperiermediums auf die einzelnen Kühlplatten muss das Temperiersystem, insbesondere müssen die darin angeordneten Fluidverteilermodule, auch die Toleranzen zwischen den Kühlplatten und zwischen den Anschlüssen an einer Kühlplatte ausgleichen sowie einen einfachen Ein- und Ausbau ermöglichen.

Viele aus dem Stand der Technik bekannte Temperiersysteme weisen dabei den Nachteil auf, dass ein umfangreicher Montageaufwand erforderlich ist, und dass das Vorhandensein einer Vielzahl von Verbindungsstellen das Leckagerisiko steigert.

Um dem entgegenzuwirken, wurde daher in der EP 3 525 280 B1 ein Fluidverteilermodul und ein Temperiersystem angegeben, bei denen der Montageaufwand und die Anzahl der Verbindungsstellen reduziert sind. Dazu ist vorgesehen, dass mindestens ein erster Abschnitt des Fluidverteilermoduls, insbesondere von dessen als Fluidkanal bezeichneter Sammelleitung, aus einem ersten Material und mindestens ein zweiter Abschnitt aus einem, insbesondere von dem ersten Material verschiedenen, zweiten Material gebildet ist, wobei der zweite Abschnitt zumindest teilweise eine geringere Steifigkeit als der erste Abschnitt aufweist, und wobei der erste Abschnitt und der zweite Abschnitt aneinander angeformt sind.

Der Fluidkanal verläuft insbesondere entlang der Längsachse des Fluidverteilers, wobei gewährleistet werden soll, dass im Fluidverteilermodul keine Verwirbelungen bzw. Druckverluste des Kühlmediums entstehen. Bevorzugt ist daher vorgesehen, dass der Fluidkanal in seinem Verlauf einen über die Länge konstanten Querschnitt aufweist. Vorzugsweise sind eine erste und eine zweite Verteilerschnittstelle mit Anbindung einer ersten und einer zweiten Abzweigleitung vorhanden, die von dem Fluidkanal abgehende, zum Kühlelement für die Batterie führende Seitenarme bilden und ebenfalls über ihre Länge konstante Strömungsquerschnitte aufweisen.

Das aus der EP 3 525 280 B1 bekannte Fluidverteilermodul ist somit - zusammenfassend ausgedrückt - ein kompaktes Bauteil zur Herstellung eines fluidführenden Temperiersystems für einen Energiespeicher, bevorzugt eines fluidführenden Kühlsystems für Fahrzeugbatterien, insbesondere zum Leiten einer unter Druck stehenden Flüssigkeit. Das Fluidverteilermodul weist mindestens eine erste Modulschnittstelle auf, die dazu ausgebildet und eingerichtet ist, das Fluidverteilermodul mit mindestens einem weiteren Fluidverteilermodul fluidtechnisch zu verbinden. Eine Mehrzahl miteinander verbundener Fluidverteilermodule bilden dann zusammen mit den Abzweigleitungen an den ersten und zweiten Verteilerschnittstellen jeweils einen Vorlauf oder einen Rücklauf des Temperiersystems. Alternativ dazu ist auch vorgesehen, dass eine Mehrzahl von Fluidverteilermodulen für eine serielle Durchströmung von Kühlelementen ausgebildet und angeordnet sind, wie dies in ähnlicher Weise auch aus dem nachstehend noch erläuterten Dokument EP 3 336 958 B1 bekannt ist. Hierbei ist jedoch hervorzuheben, dass die zum Kühlelement für die Batterie führenden Seitenarme der aus der EP 3 525 280 B1 bekannten Fluidleitungsstruktur entweder nur den Fluidvorlauf oder nur den Fluidrücklauf bilden.

Die Modulschnittstellen sind beispielsweise als Steckverbinder, Rastverbinder, Klemmverbinder, Bajonettverschluss oder als andere lösbare oder unlösbare Verbinder ausgebildet. Beispielsweise ist die erste Modulschnittstelle als einzusteckender oder aufnehmender Teil eines Steckverbinders ausgebildet und ermöglicht so die Herstellung einer dichtenden Verbindung zwischen zwei Fluidleitungsstrukturen.

Die mindestens erste und zweite Verteilerschnittstelle sind dazu ausgebildet und eingerichtet, das Fluidverteilermodul mit mindestens einem Kühlelement, insbesondere mit mindestens einer Kühlplatte, zu verbinden. Diese Verteilerschnittstellen sind dabei bekanntermaßen beispielsweise - wie die Modulschnittstellen - ebenfalls als Steckverbinder, Kupplung, Rastverbinder, Klemmverbinder, Bajonettverschluss oder als andere lösbare oder unlösbare Verbinder ausgebildet.

Vorzugsweise ist die Verteilerschnittstelle gemäß der Patentschrift EP 3 525 280 B1 in einem Winkel von 90° zur Modulschnittstelle angeordnet, wobei - abgesehen von der Erwähnung der konstanten Querschnitte der vom Fluidkanal abgehenden, zum Kühlelement für die Batterie führenden Seitenarme - die detaillierte Geometrie der Anbindung des bekannten Fluidverteilermoduls an das Kühlelement in diesem Dokument nicht thematisiert wird, vielmehr liegt der technische Schwerpunkt darin, dass - wie vorstehend erwähnt - durch die Verwendung von zwei unterschiedlichen Materialien in dem ersten Abschnitt und der zweite Abschnitt des Fluidverteilermoduls, insbesondere in dessen Sammelleitung, verschiedene mechanische Eigenschaften in dem Fluidverteilermodul kombiniert und integriert werden können. Dadurch, dass der erste Abschnitt und der zweite Abschnitt aneinander angeformt sind, wird die Anzahl an Verbindungsschnittstellen und damit das Leckagerisiko reduziert. Gleichzeitig werden auf einfache Weise Reinheits- und Qualitätsanforderungen erfüllt, da keine nennenswerte Nachbearbeitung erforderlich ist. Eine umfangreiche Nachbearbeitung kann insbesondere deshalb entfallen, da nach der Herstellung nur ein einstückiges Bauteil vorliegt.

Diese bekannte Fluidleitungsstruktur hat sich in der Praxis bewährt, wobei die mit dem ersten Abschnitt und/oder dem zweiten Abschnitt verbundene Modulschnittstelle zudem ein einfaches Zusammenfügen von mindestens zwei Fluidverteilermodulen gewährleistet, wodurch zwei nebeneinander angeordnete Kühlelemente mit einem Fluid durchströmbar werden. Der modulare Aufbau ermöglicht so auch die Realisierung von Temperiersystemen verschiedenster Größe.

Gemäß einer Ausgestaltung des bekannten Fluidverteilermoduls ist vorgesehen, dass an der ersten Modulschnittstelle und/oder an der zweiten Modulschnittstelle und/oder an der ersten Verteilerschnittstelle und/oder an der zweiten Verteilerschnittstelle mindestens eine Dichtung angeformt ist. Vorzugsweise wird die Dichtung bereits bei der Herstellung angeformt, so dass das Fluidverteilermodul unmittelbar danach verwendbar ist. Dadurch, dass die Dichtung angeformt ist, ist sie bereits vorteilhaft stoffschlüssig mit der jeweiligen Schnittstelle verbunden, wodurch eine zuverlässige Dichtigkeit gewährleistet ist.

Das Kühlsystem gemäß der EP 3 336 958 B1 zeichnet sich dadurch aus, dass es Folgendes umfasst: eine als "refrigerant introduction port" bezeichnete Kältemitteleinlassöffnung, durch die flüssiges Kältemittel eingeführt wird, und eine als "refrigerant discharge port" bezeichnete Kältemittelauslassöffnung, durch die das flüssige Kältemittel abgegeben wird; eine Vielzahl von Kältemittelrohren, die über ihre Länge einen konstanten Querschnitt aufweisen und so konfiguriert sind, dass sie mit der Kältemitteleinleitungsöffnung oder der Kältemittelaustrittsöffnung kommunizieren; ein oder mehrere Rohrverbindungselemente, die dazu konfiguriert sind, zwei oder mehr der Kältemittelrohre so zu verbinden, dass die Kältemittelrohre miteinander kommunizieren, wobei die Rohrverbindungselemente dazu konfiguriert sind, das flüssige Kältemittel aufzuteilen und/oder eine Strömungsrichtung des flüssigen Kältemittels zwischen den verbundenen Kältemittelrohren zu ändern; und eine Vielzahl von Kühlplatten, von denen jede einen hohlen Strömungskanal aufweist, der mit mindestens einem der Kältemittelrohre kommuniziert, und von denen jede eine Oberfläche aufweist, auf der ein entsprechendes Batteriemodul montiert ist, wobei das flüssige Kältemittel innerhalb des Hohlraums zirkuliert. Zur Erhöhung einer den Wärmeaustausch fördernden Konvektion in den Kühlplatten können dabei zusätzlich spezielle Elemente vorgesehen sein. In der Kältemitteleinlassöffnung und in der Kältemittelauslassöffnung können Temperatursensoren montiert sein.

DE 10 2022 211 533 A1 offenbart einen Kühler für Batteriesysteme mit einer Fluidleitungsstruktur zwischen einer Sammelleitung und einem Kühlelement gemäß dem Oberbegriff des Anspruchs 1. DE 10 2021 124 621 A1 betrifft einen Kühlkörper mit Anschlussabschnitten zur fluidischen Verbindung mehrerer Kühlmodule und eine modulare Fluidverteilung in einem Kühlsystem.

Der vorliegenden Erfindung liegt die Aufgabe zugrunde, eine Fluidleitungsstruktur für ein modulares Temperiersystem eines Energiespeichers, insbesondere für ein Kühlsystem für Fahrzeugbatterien, der eingangs genannten Art bei Erhalt sowie Verbesserung seines vorteilhaft geringen Montageaufwandes und ohne Vergrößerung der Anzahl von Verbindungsstellen derart zu modifizieren, dass darin eine strömungsmechanische Verbesserung des Fluidstromes erzielt werden kann. Gleichzeitig soll dabei auch der Forderung nach einer möglichst wenig raumgreifenden Bauweise im Hinblick auf den begrenzten Bauraum im Temperiersystem Rechnung getragen werden, wobei insbesondere in bauraumsparender Weise Vor- und Rücklauf sehr nah zueinander angeordnet werden sollen.

Die vorstehend genannte Aufgabe wird durch einen Konnektorblock nach Anspruch 1 für eine eingangs genannte Fluidleitungsstruktur gelöst, umfassend zumindest eine erste und eine zweite, von einer Sammelleitung zu einem Kühlelement führende Abzweigleitung für den Vorlauf des Fluids und/oder für den Rücklauf des Fluids, von denen mindestens eine der Abzweigleitungen trichterförmig ausgebildet ist, wobei der Querschnitt dieser Abzweigleitung ausgehend von einem Querschnitt an einer Seite, an der die Abzweigleitung an einer ersten Verteilerschnittstelle oder an einer zweiten Verteilerschnittstelle an die Sammelleitung anschließbar ist, sich bis hin zu einem Querschnitt auf der Seite des Kühlelements erweitert.

Die vorstehend genannte Aufgabe wird des Weiteren gemäß Anspruch 6 dadurch gelöst, dass in einer Fluidleitungsstruktur der eingangs genannten Art mindestens eine der Abzweigleitungen für den Vorlauf des Fluids oder für den Rücklauf des Fluids trichterförmig ausgebildet ist, wobei sich der Querschnitt der Abzweigleitung ausgehend von der ersten Verteilerschnittstelle oder der zweiten Verteilerschnittstelle der Sammelleitung bis zur Anbindung an den Querschnitt des fluidführenden hohlen plattenförmigen Kühlelementes erweitert. Eine solche Ausbildung muss nicht zwingend, kann aber bevorzugt durch einen Konnektorblock nach Anspruch 1 realisiert werden.

Ein erfindungsgemäßes modulares Temperiersystem enthält dementsprechend ein Kühlelement für den Energiespeicher sowie eine erfindungsgemäß ausgebildete Fluidleitungsstruktur, vorzugsweise mit einem erfindungsgemäßen Konnektorblock.

Insbesondere ist gemäß der Erfindung dabei in der Fluidleitungsstruktur bzw. in dem Konnektorblock vorgesehen, dass beide Abzweigleitungen, die für den Vorlauf des Fluids und die für den Rücklauf des Fluids, trichterförmig ausgebildet sind, wobei sich der Querschnitt jeder Abzweigleitung ausgehend von der ersten und der zweiten Verteilerschnittstelle der Sammelleitung bis zur Anbindung an den Querschnitt des fluidführenden hohlen plattenförmigen Kühlelementes, insbesondere stetig, erweitert.

Beide Abzweigleitungen der Fluidleitungsstruktur können in einem kompakten modularen Bauteil, also dem Konnektorblock, vereinigt sein, wobei dieser mit Vorteil insbesondere eine vormontierte Baueinheit bildet. Der Montageaufwand wird dadurch minimiert. Auf diese Weise umfasst die erfindungsgemäße Fluidleitungsstruktur vorteilhafterweise einen leicht zu handhabenden und einfach zu montierenden Konnektorblock, der einen für ein Kühlmittelrohr üblichen Querschnitt mit einem Querschnitt in einer sehr flachen Kühleinheit eines Kühlsystems zu verbinden vermag.

Damit wird auf strömungsoptimale Weise der Herausforderung Rechnung getragen, dass in der Fluidleitungsstruktur das - insbesondere flüssige - Kühlmedium aus der Sammelleitung in die sehr flache Kühleinheit des hohlen plattenförmigen Kühlelementes bzw. daraus zurück in die Sammelleitung zu leiten ist. Dabei kann einerseits sichergestellt werden, dass das hohle plattenförmige Kühlelement, welches in einem Temperiersystem auf ein zu kühlendes Bauteil, z. B. auf eine Batterie, aufgesetzt werden kann, einen ausreichend großen Durchströmungsquerschnitt für das Kühlmedium aufweist und dass andererseits der im Vorlauf und/oder Rücklauf auftretende Druckverlust minimiert wird, denn im Vorlauf wirkt die sich ausgehend von der Verteilerschnittstelle an der Sammelleitung im Querschnitt erweiternde Abzweigleitung bei einer Flüssigkeit vorteilhafterweise als Diffusor, während sie im Rücklauf - ebenfalls mit Vorteil - eine Düsenwirkung hat.

Das bedeutet zunächst, dass gemäß der sogenannten Kontinuitätsbeziehung der Strömungsmechanik, wonach das Produkt aus Querschnitt und Strömungsgeschwindigkeit, nämlich der Volumenstrom, über eine Leitungslänge immer konstant ist, die Strömungsgeschwindigkeit des Fluids in der Abzweigleitung von der Sammelleitung zum Kühlelement hin abnimmt bzw. in umgekehrter Richtung zunimmt.

Des Weiteren ist damit gemäß dem naturgesetzlichen Energieerhalt in der Strömung, der durch die sogenannte Bernoulli-Gleichung der Strömungsmechanik beschrieben wird, von der Sammelleitung zum Kühlelement hin mit dem Abfall der Strömungsgeschwindigkeit ein Anstieg des statischen Drucks verbunden, der somit am Kühlelement ein Maximum erreicht.

Dabei bleibt ein in der Strömungslehre als Druckverlustbeiwert, Druckverlustkoeffizient oder auch Widerstandsbeiwert bezeichneter dimensionsloser Parameter (übliches Formelzeichen (Zeta)), der ein Maß für den in einem durchströmten Bauteil, wie einer Rohrleitung oder Armatur, auftretenden Druckverlust darstellt, - sowohl, was die Düsenwirkung, als auch die Diffusorwirkung einer erfindungsgemäß ausgebildeten Abzweigleitung betrifft - im Vergleich mit einer Abzweigleitung, die bekanntermaßen einen konstanten, sich jedoch gegenüber der Sammelleitung und dem Kühlelement sprunghaft ändernden Querschnitt aufweist, optimal klein.

Der Druckverlustbeiwert wird definitionsgemäß nach der Formel $ζ = 2 * Δp / \left(ρ*{v}^{2}\right)$ bestimmt, wobei Δp der Druckverlust, ρ die Dichte des Fluids und v dessen Strömungsgeschwindigkeit ist. Er ist dabei also auch von der durch die Strömungsgeschwindigkeit bestimmten, sogenannten Reynolds-Zahl $Re = ρ * v * L / η ,$ abhängig, mit ρ der Dichte des Fluids, v dessen Strömungsgeschwindigkeit, η dessen dynamischer Viskosität und L einer charakteristischen Länge des durchströmten Leitungsstücks.

Die Reynoldszahl Re ist erfindungsgemäß im Bereich der Mündung der Abzweigleitung in das Kühlelement aufgrund der gegenüber der anderen Seite verringerten Strömungsgeschwindigkeit v vorteilhafterweise schon minimal.

Der Druckverlust Δp kann dabei optional auch durch eine Absenkung des Volumenstroms und, weil er auch von einer Oberflächenrauheit im Inneren der jeweiligen Abzweigleitung abhängt, gegebenenfalls durch eine Glättung der Innenfläche der Abzweigleitung zusätzlich optimiert werden.

Wenn allerdings die Abzweigleitung - wie bevorzugt auch der gesamte Konnektorblock - aus einem glasfasergefüllten Kunststoff hergestellt ist, lassen sich erwünscht glatte Innenflächen bereits in einem Spritzgießprozess beim Entformen von einem entsprechend glatten Kern erzielen.

Bei Kenntnis der Druckverlustbeiwerte aller Leitungsstücke des Temperiersystems kann der Gesamt-Druckabfall im System ermittelt und entsprechend die Auslegung bzw. die Einstellung der Betriebsparamter eines Fördergeräts, wie z. B. einer Pumpe, vorgenommen werden. Eine Senkung der Druckverlustbeiwerte ermöglicht somit den Einsatz bzw. Betrieb von Pumpen mit vergleichsweise geringerer Leistung, bewirkt also - wenngleich der Hauptdruckverlust erfahrungsgemäß aufgrund der im Kühlelement erwünschten, mit hohen Reynolds-Zahlen Re verbundenen, turbulenten Strömung insbesondere dort auftritt - eine zumindest um einige Prozentpunkte gesteigerte Energieeffizienz des erfindungsgemäßen Temperiersystems.

Unter dem Gesichtspunkt, dass die Sammelleitung und das Kühlelement zweckmäßigerweise in unterschiedlichen Ebenen liegen können, ist es vorteilhaft, für die Abzweigleitung einen gegenüber der Sammelleitung abgewinkelten Verlauf vorzusehen, wobei ein Winkel zwischen der Mittenachse der Abzweigleitung und der Mittenachse der zugehörigen Verteilerschnittstelle - im Sinne eines geringen auftretenden Druckverlustes - im Bereich von 10° bis 60°, vorzugsweise im Bereich von 20° bis 35°, liegen sollte. Auch ist es im Sinne einer einfachen symmetrischen Konstruktion zweckmäßig, die Winkel in Vorlauf und Rücklauf gleich groß auszubilden.

Es ist festzustellen, dass sich in einer Fluidströmung bei einer Umlenkung des Fluids Totbereiche ausbilden, in denen die Strömung nahezu ganz zum Erliegen kommt. Den Totbereichen gegenüberliegend bilden sich an der Umlenkstelle in der Leitung Prallstellen aus, in denen ebenfalls nur eine geringe Strömung herrscht. Diese Totbereiche und die gegenüberliegenden Prallstellen verringern den aktiven Querschnitt an den Umlenkstellen stark. Die Kombination aus der Querschnittserweiterung mit den vorstehend genannten Winkeln erbringt jedoch den Vorteil, dass - im Sinne eines synergistisch wirkenden Effekts - zwischen den Totbereichen und den Prallstellen noch ein optimal großer relativer Querschnitt für die Strömung erhalten bleibt.

Eine derart als Konnektorblock ausgeführte erfindungsgemäße Fluidleitungsstruktur kann aufgrund einer solchen abgewinkelten Form seiner fluidführenden Teile problemlos in einem flachen Batteriegehäuse angeordnet werden. Durch eine große Auflagefläche des Kühlelementes kann der Konnektorblock dabei kippfest an der Kühleinheit angeordnet werden. Um dem Konnektorblock genügend Stabilität zu geben, können dabei optional an verschiedenen Stellen - wie nachstehend noch genauer ausgeführt - Rippen zur Verstärkung vorgesehen sein.

Die auf dem Kühlelement schräg angestellte trichterförmige Anschlusskontur der Abzweigleitung impliziert, dass eine um eine Anschlussöffnung des Kühlelementes, in die die Abzweigleitung jeweils mündet, anzuordnende Dichtung im Sinne einer effizienten Dichtwirkung oval ausgebildet sein sollte, da auf der anderen, der Verteilerschnittstelle der Sammelleitung zu gerichteten Seite der Abzweigleitung unter Umständen nicht genügend Montagefreiheit vorhanden sein könnte, um dort eine Dichtung zu verlegen, die dann dort allerdings kreisrund ausgeführt werden könnte.

Die erfindungsgemäße Fluidleitungsstruktur kann - im Sinne einer den Wärmeaustausch durch Vermeidung von Spalten zwischen den Bauteilen fördernden Bauweise - vorzugsweise in dem Batteriegehäuse vergossen sein, bzw. jedenfalls so verbaut sein, dass es nicht mehr möglich ist, es nach einer Beschädigung als ganzen Block auszutauschen. Damit verbindet sich eine besonders verstärkte Forderung nach einer möglichst hohen Lebensdauer der erfindungsgemäßen Fluidleitungsstruktur.

Technische Untersuchungen weisen darauf hin, dass insbesondere von einem Bauteil abstehende Vorsprünge eine erhöhte Gefahr für beispielsweise Transportschäden in sich bergen. **In** bevorzugter Ausbildung kann dem im Rahmen der Erfindung entgegengewirkt werden, indem vorgesehen ist, dass mindestens eine der ersten oder der zweiten Verteilerschnittstellen zum jeweiligen Anschluss der Abzweigleitungen, besonders bevorzugt beide Verteilerschnittstellen, sowohl auf der Seite der Sammelleitung als auch auf der Seite der Abzweigleitungen als Verbinderteile Buchsen (sogenannte "female parts") ausgebildet sind.

Korrespondierend sind dann zur Verbindung der Sammelleitung mit der/den Abzweigleitungen erfindungsgemäß Steckerteile zu verwenden, die als Doppelstecker (mit beidseitig sogenannten "male parts") ausgeführt sind. Sollte ein derartiger Steckverbinder, z. B. bei Transport oder Montage, beschädigt werden, lässt er sich vorteilhafterweise einfach gegen einen neuen Doppelstecker austauschen, ohne dass dadurch die übrigen Bauteile in Mitleidenschaft gezogen würden.

Die Steckerteile, welche als konstruktiv schwächste Komponenten an der erfindungsgemäßen Fluidleitungsstruktur aufgefasst werden können, können so vorteilhafterweise als Verschleißteile konzipiert werden, welche die Lebensdauer der konstruktiven Gesamtheit nicht beeinträchtigen. Hierzu können sie insbesondere in Leichtbauweise ausgeführt werden, wobei sie an verschiedenen Stellen, wie an Schrägen für das Aufweiten einer Halteklammer einer als Buchsenteil ausgeführten Gegenkupplung, Materialaussparungen aufweisen.

Weitere vorteilhafte Ausgestaltungen der Erfindung ergeben sich aus der folgenden Figurenbeschreibung und den abhängigen Unteransprüchen.

Es zeigen:
- Fig. 1a und 1b: jeweils in der Draufsicht, eine Gegenüberstellung eines Ausführungsbeispiels einer erfindungsgemäßen Fluidleitungsstruktur (Fig. 1a) und einer bekannten Fluidleitungsstruktur (Fluidverteilermodul, Fig. 1b) für ein modulares Temperiersystem,
- Fig. 2: in dreidimensionaler perspektivischer Draufsicht, ein Ausführungsbeispiel eines erfindungsgemäßen Konnektorblocks,
- Fig. 3a: im Längsschnitt durch eine Mittenachse einer Abzweigleitung des erfindungsgemäßen Konnektorblocks, eine ergänzende Darstellung zu Fig. 2, die neben dem Konnektorblock auch ein angeschlossenes Kühlelement zeigt,
- Fig. 3b und Fig. 3c: in Fig. 3a entsprechenden Darstellungen, jedoch spiegelbildlich, Längsschnitte durch die jeweilige Mittenachse einer Abzweigleitung des erfindungsgemäßen Konnektorblocks für den Vorlauf (Fig. 3b) und für den Rücklauf (Fig. 3c),
- Fig. 4 und Fig. 5: ein Ausführungsbeispiel eines bevorzugten Steckerteils einer erfindungsgemäßen Fluidleitungsstruktur in der Draufsicht (Fig. 4) und im Längsschnitt (Fig. 5).

In den verschiedenen Figuren der Zeichnung sind gleiche Teile stets mit denselben Bezugszeichen versehen und werden daher in der Regel nur einmal beschrieben.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

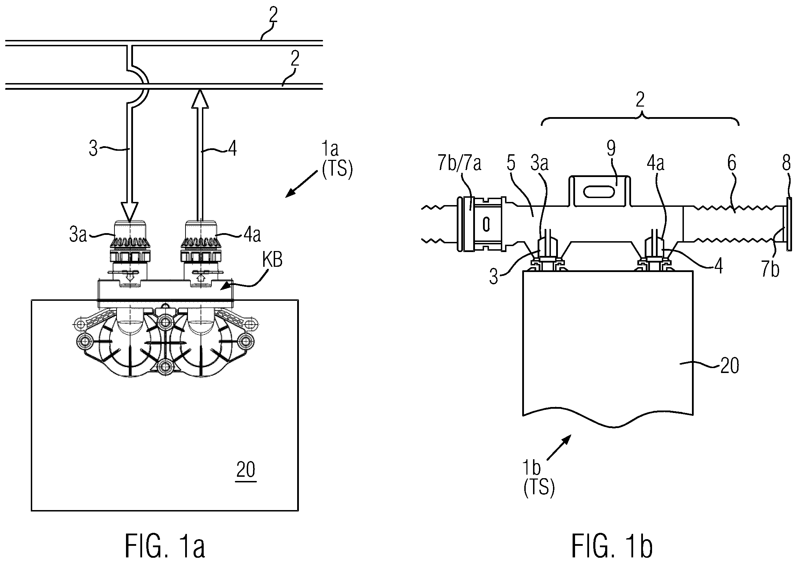

Fig. 1a und Fig. 1b zeigen Ausführungen eines modularen Temperiersystem TS für einen Energiespeicher, insbesondere für ein Kühlsystem für Fahrzeugbatterien, mit zwei unterschiedlichen Fluidleitungsstrukturen 1a, 1b.

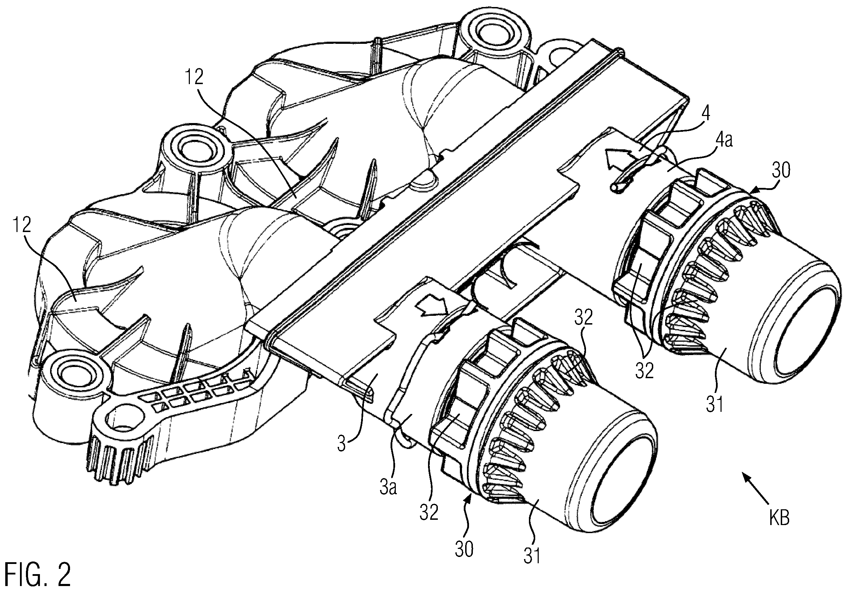

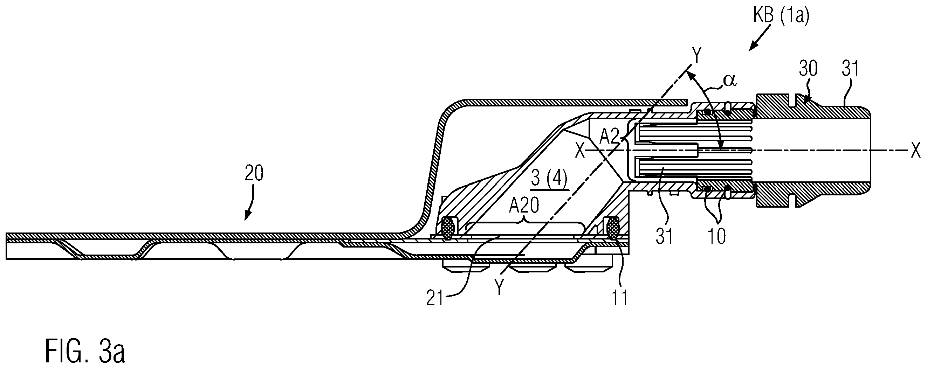

Eine erste Fluidleitungsstruktur 1a (links, in Fig. 1a) ist erfindungsgemäß, die andere, zweite, Fluidleitungsstruktur 1b (rechts, in Fig. 1b) ist auf bekannte Art (gemäß der EP 3 525 280 B1) als Fluidverteilermodul ausgebildet. Die erfindungsgemäße Ausbildung der ersten Fluidleitungsstruktur 1a ist in Fig. 1a insbesondere durch einen mit dem Bezugszeichen KB bezeichneten Konnektorblock charakterisiert, dessen Aufbau und Wirkungsweise im Detail noch nachfolgend, insbesondere unter Bezugnahme auf Fig. 2 und 3a bis 3c, beschrieben wird.

Die Fluidleitungsstrukturen 1a, 1b umfassen jeweils mindestens eine Sammelleitung 2 - die erfindungsgemäße Fluidleitungsstruktur 1a zwei Sammelleitungen 2 für Zufluss und Abfluss - für das Fluid sowie jeweils mindestens eine erste Abzweigleitung 3 und mindestens eine zweite Abzweigleitung 4 für den Vorlauf des Fluids an mindestens ein fluidführendes hohles, insbesondere plattenförmiges, Kühlelement 20 und/oder für den Rücklauf des Fluids von dem fluidführenden hohlen plattenförmigen Kühlelement 20 sowie mindestens eine erste Verteilerschnittstelle 3a und eine zweite Verteilerschnittstelle 4a zum jeweiligen Anschluss der Abzweigleitungen 3, 4 an die Sammelleitung 2. Die Abzweigleitungen 3, 4 bilden jeweils Fluidkanalseitenpfade zu der jeweils einen Hauptkanal bildenden Sammelleitung 2 und verbinden diese mit den Kühlelementen 20.

In der jeweiligen Sammelleitung 2 der erfindungsgemäßen Fluidleitungsstruktur 1a können einfache mehrschichtige Kunststoffrohre eingesetzt werden.

In der Sammelleitung 2 des bekannten Fluidverteilermoduls 1b ist ein erster Abschnitt 5 des Fluidverteilermoduls 1 aus einem ersten Material gebildet, während ein zweiter Abschnitt 6 aus einem von dem ersten Material verschiedenen, zweiten Material, gebildet ist.

Hierbei ist jedoch hervorzuheben, dass die zum Kühlelement 20 für die Batterie führenden Seitenarme 3, 4 der aus der EP 3 525 280 B1 bekannten Fluidleitungsstruktur 1b im Gegensatz zur Erfindung entweder nur den Fluidvorlauf oder nur den Fluidrücklauf bilden. Der Fluidvorlauf wird durch das Fluidverteilermodul 1b zu Teilströmen verzweigt bzw. in der Gegenrichtung der Fluidrücklauf aus Teilströmen zu einem Hauptstrom vereinigt.

Im Gegensatz dazu vereinigen die zum Kühlelement 20 für die Batterie führenden Seitenarme 3, 4 in der erfindungsgemäßen Fluidleitungsstruktur 1a in bauraumsparender Weise Vor- und Rücklauf sehr nah zueinander in einem einzigen Leitungselement, und zwar insbesondere in einem erfindungsgemäßen Konnektorblock KB gemäß Fig. 2.

Die bekannte Fluidleitungsstruktur 1b weist eine erste Modulschnittstelle 7a und eine zweite Modulschnittstelle 7b zur Verbindung von zwei bekannten Fluidleitungsstrukturen 1b miteinander auf, wobei die Modulschnittstellen 7a, 7b bevorzugt als Steckverbinder ausgebildet sind. Auf der in der Figur 1b rechten Seite ist die Sammelleitung 2 an der zweiten Modulschnittstelle 7b durch eine Endkappe 8 verschlossen. Das Fluidverteilermodul 1b dient auf diese Weise als letztes Modul eines Vorlaufs oder eines Rücklaufs, so dass hier kein weiteres Fluidverteilermodul durchströmt wird, sondern lediglich das angeschlossene Kühlelement 20.

Die Sammelleitung 2 der bekannten Fluidleitungsstruktur 1b weist im Verlauf zwischen der ersten Modulschnittstelle 7a und der zweiten Modulschnittstelle 7b bzw. der Endkappe 8 einen im Wesentlichen konstanten mittleren Querschnitt auf, wobei ein oder beide Abschnitte 5, 6 - wie dargestellt, insbesondere der zweite Abschnitt 6 - auch als Wellrohr ausgebildet sein kann/können. Durch die dadurch vorhandenen, radial verlaufenden Wellenberge und Wellentäler lässt sich die Druckfestigkeit vorteilhaft steigern und eine Wärmeausdehnung des Fluids bzw. der Sammelleitung 2 kompensieren. Ähnliche technische Maßnahmen können ggf. auch in der Sammelleitung 2 der erfindungsgemäßen Fluidleitungsstruktur 1a vorgesehen sein.

An den Modulschnittstellen 7a, 7b - wie auch an den Verteilerschnittstellen 3a, 4a - können zudem auch jeweils Dichtungen angeordnet sein, wobei die Dichtungen insbesondere angeformt sein können. Die Dichtungen sind in Fig. 3a mit den Bezugszeichen 10 (am Steckverbinder 30) und 11 (am Kühlelement 20) bezeichnet.

Die Geometrie mit den an das Kühlelement 20 schräg unter dem Winkel α angestellten trichterförmigen Anschlusskonturen der Abzweigleitungen 3, 4 bedingt, dass die um die jeweilige Anschlussöffnungen 21 des Kühlelementes 20, in die jeweils die Abzweigleitungen 3, 4 münden, angeordneten Dichtungen 11 oval ausgebildet sind, während die Dichtungen 10 am Steckerteil 30 O-Ringe sind.

Fig. 2 zeigt - wie bereits erwähnt - in perspektivischer Darstellung ein bevorzugtes Ausführungsbeispiel eines in Fig. 1a nicht im Detail dargestellten erfindungsgemäßen Konnektorblocks KB, der zusammen mit einem angeschlossenen Kühlelement 20 auch in Fig. 3a bis 3c jeweils in geschnittenen Ansichten wiedergegeben ist.

Wie daraus hervorgeht, sind in dem Konnektorblock beide Abzweigleitungen 3, 4, die Abzweigleitung 3 für den Vorlauf des Fluids (siehe äußere Pfeileinprägung auf dem Außenmantel, Pfeil "Durchfluss") und die Abzweigleitung 4 für den Rücklauf des Fluids (siehe ebenfalls Pfeileinprägung und Pfeil "Durchfluss") miteinander baulich vereinigt.

Außerdem zeigen die Figuren 2 und 3a bis 3c, dass beide Abzweigleitungen 3, 4 jeweils trichterförmig ausgebildet sind, wobei sich der Querschnitt jeder Abzweigleitung 3, 4 ausgehend von dem Querschnitt A2 an der ersten und der zweiten Verteilerschnittstelle 3a, 4a an der (in Fig. 2 und 3a bis 3c nicht dargestellten) Sammelleitung 2 bis zum Erreichen des Querschnitts A20 am fluidführenden hohlen plattenförmigen Kühlelement 20, insbesondere stetig, vorzugsweise konisch, erweitert.

Dadurch wird erreicht, dass das hohle plattenförmige Kühlelement 20, welches auf ein zu kühlendes Bauteil, z. B. auf eine Batterie, aufgesetzt werden kann, einen ausreichend großen Durchströmungsquerschnitt für das Kühlmedium aufweist und dass andererseits der im Vorlauf (Abzweigleitung 3) und/oder Rücklauf (Abzweigleitung 4) auftretende Druckverlust Δp minimiert wird, denn im Vorlauf wirkt die sich ausgehend von der Verteilerschnittstelle an der Sammelleitung 2 im Querschnitt erweiternde Abzweigleitung bei einer Flüssigkeit vorteilhafterweise als Diffusor, während sie im Rücklauf - ebenfalls mit Vorteil - eine Düsenwirkung hat.

Die Erweiterung des Querschnitts der Abzweigleitung 3, 4 kann dabei ausgehend von dem Querschnitt A2 an der ersten und der zweiten Verteilerschnittstelle 3a, 4a bis zum Erreichen des Querschnitts A20 am fluidführenden hohlen plattenförmigen Kühlelement 20 150 % bis 500 %, bevorzugt 250 % bis 400 %, betragen.

Um dem Konnektorblock KB genügend Stabilität zu geben, sind dabei auf seiner vorzugsweise deckelartig ausgebildeten Ober- bzw. - je nach Einbausituation - Unterseite an verschiedenen Stellen, insbesondere vom jeweiligen Zentrum der Abzweigleitung(en) 3, 4 ausgehende, radial verlaufende Verstärkungsrippen 12 vorgesehen.

Unter dem Gesichtspunkt, dass die Sammelleitung 2 und das Kühlelement 20 in unterschiedlichen Ebenen liegen können, ist es von Vorteil, für die Abzweigleitung(en) 3, 4 einen gegenüber der Sammelleitung 2 bzw. der Achse X-X der jeweiligen Verteilerschnittstelle 3a, 4a abgewinkelten Verlauf vorzusehen, der von der einer rechtwinkligen Strömungsumleitung, wie sie beispielsweise gemäß der EP 3 336 958 B1 vorgesehen ist, abweicht.

Ein Winkel α zwischen der Mittenachse Y-Y der Abzweigleitung 3, 4 und der Mittenachse X-X der zugehörigen Verteilerschnittstelle 3a, 4a (siehe Fig. 3a) kann dabei im Bereich von 10° bis 60°, vorzugsweise im Bereich von 20° bis 35°, liegen.

Exemplarisch wurden mit einem Wasser-Glykol-Gemisch (50/50, Dichte = 1071,0 kg/m³, dynamische Viskosität = 3,98 mPa*s) bei 23 °C unter Einhaltung der o. g. A20/A2-Verhältnisse und in den vorstehend genannten Winkelbereichen α Bestimmungen der im Vorlauf und im Rücklauf auftretenden Druckverluste Δp durchgeführt. Der mittlere Volumenstrom des Fluids betrug dabei 30 l/min und ein mittlerer Fluiddruck lag im Bereich von 1,04 bis 1,06 bar. Die dabei bestimmten auftretenden Druckverluste Δp waren im Vergleich zum Gesamtdruck gering und nahmen im Vorlauf Werte nur unter 120 mbar, teilweise unter 80 mbar, und im Rücklauf sogar nur unter 80 mbar, teilweise unter 50 mbar, an, wobei sie mit zunehmendem Winkel α zwischen der Mittenachse Y-Y der Abzweigleitung 3, 4 und der Mittenachse X-X der zugehörigen Verteilerschnittstelle 3a, 4a und zunehmendem A20/A2-Verhältnis jedoch anwuchsen. Allerdings verkleinert sich mit zunehmendem Winkel α die notwendige Baulänge der Abzweigleitungen 3, 4, was im Sinne der geforderten geringen Raumausdehnung von Vorteil ist.

Bei einer sprunghaften, jedoch symmetrischen Aufweitung des erfindungsgemäßen Trichterquerschnitts kann ein Wert ζ₁ (dimensionsloser Druckverlustbeiwert Zeta bezogen auf den (kleineren) Durchmesser d₁ am Querschnitt A2) im Zulauf (Abzweigleitung 3), nach den allgemeinen Formeln ${ζ}_{1} = {\left(1-{\left(\frac{{d}_{1}}{{d}_{2}}\right)}^{2}\right)}^{2}$ ${ζ}_{1} = {\left(1-\frac{{A}_{1}}{{A}_{2}}\right)}^{2}$ bestimmt werden. In diesen allgemeinen Formeln sind dann - bezogen auf die Erfindung - d1 der (kleinere) Durchmesser am Querschnitt A2, d2 der (größere) Durchmesser am Querschnitt A20, A1 der (kleinere) Querschnitt A2, und A2 der (größere) Querschnitt A20.

Umgekehrt kann bei einer sprunghaften, jedoch symmetrischen Verengung des erfindungsgemäßen Trichterquerschnitts ein Wert ζ₂ (dimensionsloser Druckverlustbeiwert Zeta bezogen auf den (kleineren) Durchmesser d₂ am Querschnitt A2) im Rücklauf (Abzweigleitung 4), nach den allgemeinen Formeln ${ζ}_{2} = {\left(0,707∗\sqrt{1 - {\left(\frac{{d}_{2}}{{d}_{1}}\right)}^{2}}\right)}^{2}$ ${ζ}_{2} = 0 , 5 ∗ \left(1-\frac{{A}_{2}}{{A}_{1}}\right)$ bestimmt werden. In diesen zweiten allgemeinen Formeln, die eine im Vergleich mit einem Diffusor gegenläufige Düsenströmung beschreiben, sind dann, - bezogen auf die Erfindung - d2 der (kleinere) Durchmesser am Querschnitt A2, d1 der (größere) Durchmesser am Querschnitt A20, A1 der (größere) Querschnitt A20, und A2 der (kleinere) Querschnitt A2.

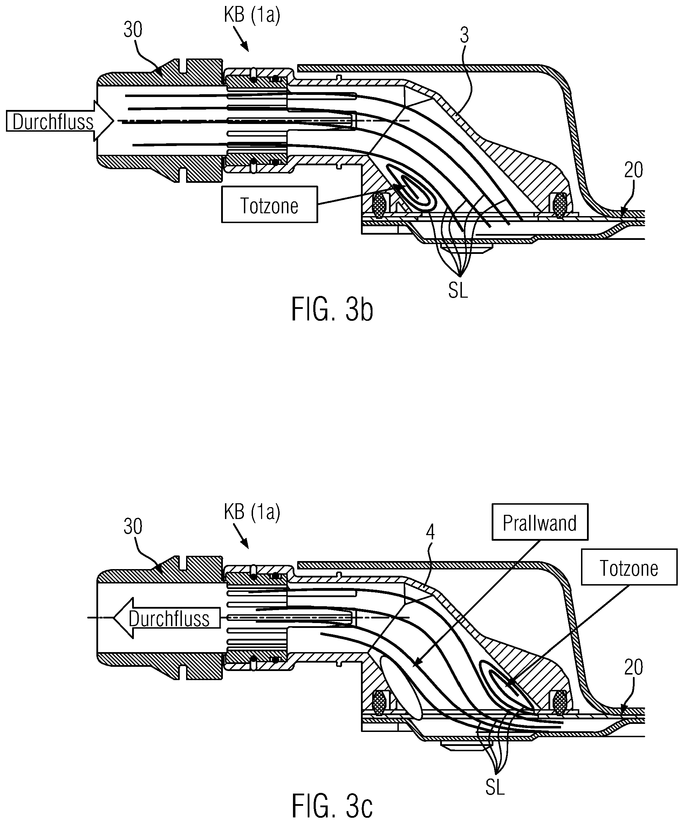

Bei nicht sprunghaften und/oder nicht symmetrischen, also stetigen, insbesondere konischen, Aufweitungen und Verengungen des Querschnitts folgen die Abhängigkeiten der Zeta-Werte einem grundsätzlich ähnlichen, jedoch nicht identischen, und vom Winkel α abhängigen Verlauf, der jeweils empirisch ermittelt werden kann, wobei insbesondere durch Vermeidung bzw. zumindest einer Verkleinerung von Fluid-Totzonen (siehe Fig. 3b, 3c), die an einer Sprungstelle auftreten, noch bessere Werte erzielt werden können.

Die Fig. 3b und 3c veranschaulichen das Strömungsverhalten in jeweils einer Abzweigleitung 3, 4 des erfindungsgemäßen Konnektorblocks KB gemäß Fig. 3a. Bei konstruktiver Übereinstimmung mit Fig. 3a wurden dabei im Sinne einer besseren Übersichtlichkeit in Fig. 3b und 3c nicht alle Teile mit Bezugszeichen bezeichnet, dafür aber Strömungslinien SL des Fluids schematisch angedeutet.

Dementsprechend bilden sich in der Strömung bei einer Umlenkung Totbereiche (siehe "Totzone"), in denen die Strömung lokal fast zum Erliegen kommt. Gegenüber den Totbereichen bilden sich Prallstellen (siehe "Prallwand"), in denen ebenfalls lokal nur eine geringe Strömungsgeschwindigkeit bzw. sogar eine Rückströmung herrscht. Diese Totbereiche und die gegenüberliegenden Prallstellen verringern den aktiven Strömungsquerschnitt an diesen Stellen stark.

Jedoch erbringt eine Kombination aus den vorstehend genannten Winkelbereichen α mit der Querschnittserweiterung A20/A2 nun den Vorteil, dass zwischen den Totbereichen und den Prallstellen ein ausreichend großer aktiver Querschnitt für die Strömung erhalten bleibt, der sich in geringen Zeta-Werten niederschlägt.

Die mindestens ersten und zweiten Verteilerschnittstellen 3a, 4a können (wie die Modulschnittstellen 7a, 7b eines bekannten Moduls) beispielsweise als Steckverbinder, Rastverbinder, Klemmverbinder, Bajonettverschluss oder als andere lösbare oder unlösbare Verbinder ausgebildet sein. Beispielsweise ist gemäß Fig. 1b die erste Modulschnittstelle 7a jeweils als einzusteckender oder aufnehmender Teil eines Steckverbinders ausgebildet und ermöglicht so die Herstellung einer dichtenden Verbindung zwischen zwei Fluidleitungsstrukturen 1b.

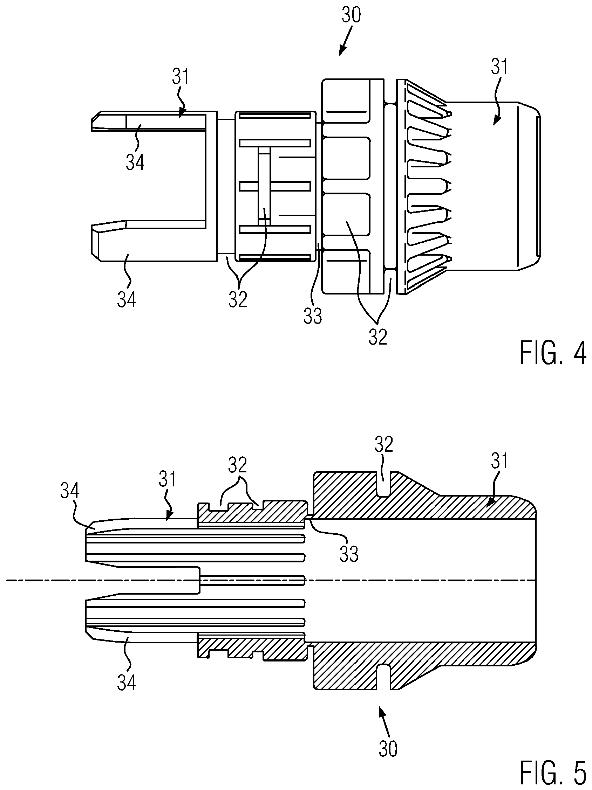

Unter dem bereits oben erläuterten Aspekt einer erwünschten hohen integralen Beschädigungsresistenz der erfindungsgemäßen Fluidleitungsstruktur 1a, das z. B. mit einem Batteriegehäuse vergossen sein kann, kommt auch der in den Figuren 2 und 3a bis 3c dargestellten spezifischen Verwendung eines Steckerteiles 30, das als Doppelstecker mit beidseitig sogenannten "male parts" 31 ausgeführt und in Fig. 4 und 5 als Einzelteil dargestellt ist, im Rahmen der Erfindung eine hohe technische Bedeutung zu.

Die Verwendung eines derartig ausgeführten Steckerteiles 30, dem ebenfalls eine eigenständige erfinderische Bedeutung beigemessen wird, gestattet es, dass mindestens eine der ersten oder der zweiten Verteilerschnittstellen 3a, 4a zum jeweiligen Anschluss der Abzweigleitungen 3, 4, besonders bevorzugt - wie dargestellt - beide Verteilerschnittstellen 3a, 4a, sowohl auf der Seite der Sammelleitung 2 als auch auf der Seite der Abzweigleitungen 3, 4 als Buchsen, also als sogenannte "female parts", ausgebildet sind.

Ein derartiges, aus dem Konnektorblock vorstehendes Steckteil 30, wie es am Konnektorblock KB in Fig. 2 gezeigt ist, und das z. B. bei Transport oder Montage, beschädigt wird, lässt er sich problemlos gegen ein neues austauschen, wobei vorteilhafterweise die übrige kompakte bauliche Struktur des Konnektorblocks KB nicht darunter leidet.

Es war auch schon darauf hingewiesen worden, dass derartige Steckerteile 30, welche als konstruktiv schwächste Komponente an einer erfindungsgemäßen Fluidleitungsstruktur 1a auffassbar sind, vorteilhafterweise, indem sie insbesondere in Leichtbauweise ausgeführt sind, als Verschleißteil konzipiert werden können, wobei sie in stabiler, aber materialökonomischer Weise an verschiedenen Stellen, wie an Schrägen für das Aufweiten einer Halteklammer (siehe Fig. 2, Bezugszeichen 12) einer als Buchsenteil ausgeführten Gegenkupplung und oder zur Aufnahme von Dichtungen 10, Materialaussparungen 32 aufweisen, die insbesondere - wie gezeigt - umfangsgemäß und/oder in achsparalleler Richtung verlaufen können.

Auch können mit Vorteil im Sinne der Konzipierung als Verschleißteile an den Steckteilen 30, insbesondere zwischen den beiden "male parts" 31, Sollbruchstellen 33 mit vergleichsweise geringerer Wandstärke als in den übrigen Wandbereichen der Steckverbinder 30 vorgesehen sein.

Schließlich ist es im Sinne einer Erhöhung der Montagesicherheit von Vorteil, wenn die Steckteile 30, zumindest auf ihrer bei der Montage der Abzweigleitung 3, 4 zugewandten Seite, eine ihrer jeweils zugeordneten komplementären Aufnahme entsprechende Codierung aufweisen, die gewährleistet, dass die Steckverbinder 30 nur lagerichtig montiert werden können. Eine derartige Codierung kann beispielsweise - wie dargestellt - durch asymmetrisch angeordnete oder ausgebildete Führungsstutzen 34 bereitgestellt werden
Die Erfindung ist nicht auf die dargestellten und beschriebenen Ausführungsbeispiele beschränkt, bei denen der erfindungsgemäße Konnektorblock KB mit herstellungstechnischem Vorteil symmetrisch hinsichtlich einer Achse zwischen den Abzweigleitungen 3, 4 für Vorlauf und Rücklauf ausgebildet ist, sondern umfasst auch alle im Sinne der Erfindung gleichwirkenden Ausführungen.

### Bezugszeichenliste

- 1a: Erste Fluidleitungsstruktur (erfindungsgemäß)
- 1b: Zweite Fluidleitungsstruktur (herkömmlich)
- 2: Sammelleitung von 1a, 1b
- 3: Abzweigleitung (Vorlauf von 2 zu 20) von 1a, 1b
- 3a: Verteilerschnittstelle für 3
- 4: Abzweigleitung (Rücklauf von 20 zu 2) von 1a, 1b
- 4a: Verteilerschnittstelle für 3
- 5: Erster Abschnitt von 2 (nicht erfindungsgemäß)
- 6: Zweiter Abschnitt von 2 (nicht erfindungsgemäß)
- 7a: Erste Modulschnittstelle (nicht erfindungsgemäß)
- 7b: Zweite Modulschnittstelle (nicht erfindungsgemäß)
- 8: Endkappe an 2 (nicht erfindungsgemäß)
- 9: Rahmen von 1a, 1b (nicht erfindungsgemäß)
- 10: Dichtung (an 30, Fig. 3a)
- 11: Dichtung (an 20, Fig. 3a)
- 12: Halteklammer
- 20: Kühlelement
- 21: Anschlussöffnung für 3, 4 in 20
- 30: Doppelsteckverbinder
- 31: Steckerende ("male part") von 30
- 32: Ausnehmung in 30
- 33: Sollbruchstelle von 30
- 34: Führungsstutzen von 30

- A2: Querschnittsfläche von 3, 4 bei 2
- A20: Querschnittsfläche von 3, 4 bei 20
- KB: Konnektorblock von 1a (mit 3, 4)
- SL: Strömungslinien des Fluids (Fig. 3b und Fig. 3c)
- TS: Temperiersystem mit 1a, 1b, KB
- X-X: Längsachse von 30, Mittenachse von 3a, 4a
- Y-Y: Längsachse von 3, 4

- α: Winkel zwischen X-X und Y-Y (Fig. 3a)

## Patentansprüche

1. Konnektorblock (KB) für eine Fluidleitungsstruktur (1a) für ein modulares Temperiersystem (TS) eines Energiespeichers, insbesondere für ein Kühlsystem für Fahrzeugbatterien, umfassend zumindest eine erste und eine zweite, von mindestens einer Sammelleitung (2) zu einem Kühlelement (20) führende Abzweigleitung (3, 4) für den Vorlauf des Fluids oder für den Rücklauf des Fluids, 2- **1³ dadurch gekennzeichnet, dass** beide Abzweigleitungen (3, 4) trichterförmig ausgebildet und schräg auf dem Kühlelement (20) angestellt sind, wobei der jeweilige Querschnitt dieser Abzweigleitungen (3, 4) ausgehend von einem Querschnitt (A2) an einer Seite, an der die Abzweigleitung (3, 4) an einer ersten Verteilerschnittstelle (3a) oder an einer zweiten Verteilerschnittstelle (4a) an die Sammelleitung (2) anschließbar ist, sich bis hin zu einem Querschnitt (A20) auf der Seite des Kühlelements (20) stetig konisch erweitert.

2. Konnektorblock (KB) nach Anspruch 1,
**dadurch gekennzeichnet, dass** beide Abzweigleitungen (3, 4) miteinander baulich vereinigt sind, vorzugsweise einschließlich ihrer ersten und zweiten Verteilerschnittstelle(n) (3a, 4a) zur Verbindung mit der Sammelleitung (2) der Fluidleitungsstruktur (1a).

3. Konnektorblock (KB) nach Anspruch 1 oder 2,
**dadurch gekennzeichnet, dass** die Erweiterung des Querschnitts der Abzweigleitung (3, 4) ausgehend von dem Querschnitt (A2) auf der Seite der Sammelleitung (2) bis zum Erreichen eines Querschnitts (A20) auf der Seite des Kühlelements (20) 150 % bis 500 %, bevorzugt 250 % bis 400 %, beträgt.

4. Konnektorblock (KB) nach einem der Ansprüche 1 bis 3,
**dadurch gekennzeichnet, dass** der Querschnitt (A2) der Abzweigleitung (3, 4) auf der Seite der Sammelleitung (2) und der Querschnitt (A20) auf der Seite des Kühlelements (20) in unterschiedlichen Ebenen liegen und die Abzweigleitung(en) (3, 4) einen gegenüber diesen Ebenen abgewinkelten Verlauf aufweist/(en), der von der einer rechtwinkligen Strömungsumleitung abweicht, wobei insbesondere ein Winkel (α) zwischen der Mittenachse (Y-Y) der Abzweigleitung (3, 4) und der Mittenachse (X-X) einer zugehörigen Verteilerschnittstelle (3a, 4a) im Bereich von 10° bis 60°, vorzugsweise im Bereich von 20° bis 35°, liegt.

5. Konnektorblock (KB) nach einem der Ansprüche 1 bis 4,
**gekennzeichnet durch** Verstärkungsrippen (12), die insbesondere auf einer Ober- und/oder Unterseite des Konnektorblocks (KB) an verschiedenen Stellen, vorzugsweise als vom jeweiligen Zentrum der Abzweigleitung(en) (3, 4) ausgehende, radial verlaufende Verstärkungsrippen (12) angeordnet sind.

6. Fluidleitungsstruktur (1a) für ein modulares Temperiersystem (TS) eines Energiespeichers, insbesondere für ein Kühlsystem für Fahrzeugbatterien, mit mindestens einer Sammelleitung (2) für das Fluid sowie mit mindestens einer ersten Abzweigleitung (3) und mit mindestens einer zweiten Abzweigleitung (4) zu einem fluidführenden hohlen plattenförmigen Kühlelement (20) sowie mit mindestens einer ersten Verteilerschnittstelle (3a) und einer zweiten Verteilerschnittstelle (4a) zum jeweiligen Anschluss der Abzweigleitungen (3, 4) an die Sammelleitung (2),
**dadurch gekennzeichnet, dass** eine der Abzweigleitungen (3) für den Vorlauf des Fluids und die andere Abzweigleitung (4) für den Rücklauf des Fluids ausgebildet ist, wobei die Abzweigleitungen (3, 4) trichterförmig ausgebildet und schräg auf dem Kühlelement (20) angestellt sind, wobei sich der Querschnitt (A2) der Abzweigleitungen (3, 4) ausgehend von der ersten Verteilerschnittstelle (3a) oder der zweiten Verteilerschnittstelle (4a) der Sammelleitung (2) bis zur Anbindung an den Querschnitt (A20) des fluidführenden hohlen plattenförmigen Kühlelementes (20) stetig konisch erweitert, wobei zumindest die mindestens ersten und zweiten Abzweigleitungen (3, 4), einschließlich ihrer ersten zweiten Verteilerschnittstelle(n) (3a, 4a), miteinander baulich in einem Konnektorblock (KB) nach einem der Ansprüche 1 bis 5 vereinigt sind.

7. Fluidleitungsstruktur (1a) nach Anspruch 6,
**dadurch gekennzeichnet, dass** die Sammelleitung (2) einen im Wesentlichen konstanten mittleren Querschnitt aufweist.

8. Fluidleitungsstruktur (1a) nach einem der vorhergehenden Ansprüche, **dadurch gekennzeichnet, dass** an den Verteilerschnittstellen (3a, 4a) Dichtungen (10, 11) angeordnet sind, wobei die Dichtungen (10, 11) jeweils als O-Ring (10) oder - insbesondere im Bereich des Kühlelements (20) - als ovale Dichtung (11) ausgebildet sind und bevorzugt angeformt sind.

9. Fluidleitungsstruktur (1a) nach einem der vorhergehenden Ansprüche, **dadurch gekennzeichnet, dass** die mindestens ersten und zweiten Verteilerschnittstellen (3a, 4a) als Steckerteile (30), Rastverbinder, Klemmverbinder, Bajonettverschluss oder als andere lösbare oder unlösbare Verbinder ausgebildet sind.

10. Fluidleitungsstruktur (1a) nach einem der vorhergehenden Ansprüche, **dadurch gekennzeichnet, dass** die mindestens ersten und zweiten Verteilerschnittstellen (3a, 4a) - sowohl auf der Seite der Sammelleitung (2) als auch auf der Seite der Abzweigleitungen (3, 4) - zur Aufnahme von jeweils einem Steckteil (30), das als Doppelstecker (31/31) ausgebildet ist, als Buchsen ausgebildet sind.

11. Fluidleitungsstruktur (1a) nach Anspruch 10,
**dadurch gekennzeichnet, dass** das Steckerteil (30) insbesondere in Leichtbauweise ausgeführt ist und an verschiedenen Stellen, wie an Schrägen für das Aufweiten einer Halteklammer einer als Buchsenteil ausgeführten Gegenkupplung und oder zur Aufnahme von Dichtungen (10), Materialaussparungen (32) aufweist, die vorzugsweise umfangsgemäß und/oder in achsparalleler Richtung verlaufen.

12. Fluidleitungsstruktur (1a) nach Anspruch 10 oder 11,
**dadurch gekennzeichnet, dass** das Steckerteil (30) eine Sollbruchstelle (33) aufweist.

13. Fluidleitungsstruktur (1a) nach einem der Ansprüche 10 bis 12,
**dadurch gekennzeichnet, dass** das Steckerteil (30) eine Codierung (34) aufweist.

14. Temperiersystem (TS), insbesondere für Fahrzeugbatterien, mit mindestens einem Kühlelement (20) und mindestens einer Fluidleitungsstruktur (1a, 1b), **dadurch gekennzeichnet, dass** die mindestens eine Fluidleitungsstruktur (1a) nach einem der Ansprüche 6 bis 13 ausgebildet ist.

15. Temperiersystem (TS) nach Anspruch 14,
**dadurch gekennzeichnet, dass** die mindestens eine Fluidleitungsstruktur (1a) mit einem Batteriegehäuse vergossen ist.

16. Steckerteil (30) für eine Fluidleitungsstruktur (1a) nach einem der Ansprüche 6 bis 13,
**gekennzeichnet durch** die Merkmale des kennzeichnenden Teils eines oder mehrerer der Ansprüche 11 bis 13.

## Claims

1. Connector block (KB) for a fluid line structure (1a) for a modular temperature-control system (TS) of an energy storage device, in particular for a cooling system for vehicle batteries, comprising at least a first and a second branch line (3, 4) extending from at least one manifold line (2) to a cooling element (20) for the supply flow of the fluid or for the return flow of the fluid,
**characterized in that** both branch lines (3, 4) are funnel-shaped and are arranged obliquely on the cooling element (20), wherein the respective cross-section of these branch lines (3, 4), starting from a cross-section (A2) on a side on which the branch line (3, 4) is connectable to the manifold line (2) at a first distribution interface (3a) or at a second distribution interface (4a), continuously widens conically up to a cross-section (A20) on the side of the cooling element (20).

2. Connector block (KB) according to claim 1,
**characterized in that** both branch lines (3, 4) are structurally integrated with one another, preferably including their first and second distribution interface(s) (3a, 4a) for connection to the manifold line (2) of the fluid line structure (1a).

3. Connector block (KB) according to claim 1 or 2,
**characterized in that** the increase in the cross-section of the branch line (3, 4), starting from the cross-section (A2) on the side of the manifold line (2) up to reaching a cross-section (A20) on the side of the cooling element (20), amounts to 150 % to 500 %, preferably 250 % to 400 %.

4. Connector block (KB) according to any one of claims 1 to 3,
**characterized in that** the cross-section (A2) of the branch line (3, 4) on the side of the manifold line (2) and the cross-section (A20) on the side of the cooling element (20) lie in different planes, and the branch line(s) (3, 4) has/have a course angled relative to these planes which deviates from a right-angled flow deflection, wherein, in particular, an angle (α) between the center axis (Y-Y) of the branch line (3, 4) and the center axis (X-X) of an associated distribution interface (3a, 4a) lies in the range of 10° to 60°, preferably in the range of 20° to 35°.

5. Connector block (KB) according to any one of claims 1 to 4,
**characterized by** reinforcing ribs (12) which are arranged at various locations, in particular on an upper side and/or a lower side of the connector block (KB), preferably as radially extending reinforcing ribs (12) extending from the respective center of the branch line(s) (3, 4).

6. Fluid line structure (1a) for a modular temperature-control system (TS) of an energy storage device, in particular for a cooling system for vehicle batteries, comprising at least one manifold line (2) for the fluid, at least one first branch line (3) and at least one second branch line (4) leading to a fluid-conducting hollow plate-shaped cooling element (20), and at least one first distribution interface (3a) and one second distribution interface (4a) for respectively connecting the branch lines (3, 4) to the manifold line (2),
**characterized in that** one of the branch lines (3) is configured for the supply flow of the fluid and the other branch line (4) is configured for the return flow of the fluid, wherein the branch lines (3, 4) are funnel-shaped and are arranged obliquely on the cooling element (20), wherein the cross-section (A2) of the branch lines (3, 4), starting from the first distribution interface (3a) or the second distribution interface (4a) of the manifold line (2), continuously widens conically up to the connection to the cross-section (A20) of the fluid-conducting hollow plate-shaped cooling element (20), wherein at least the at least first and second branch lines (3, 4), including their first and second distribution interface(s) (3a, 4a), are structurally integrated with one another in a connector block (KB) according to any one of claims 1 to 5.

7. Fluid line structure (1a) according to claim 6,
**characterized in that** the manifold line (2) has a substantially constant average cross-section.

8. Fluid line structure (1a) according to any one of the preceding claims, **characterized in that** seals (10, 11) are arranged at the distribution interfaces (3a, 4a), wherein the seals (10, 11) are each configured as an O-ring (10) or, in particular in the region of the cooling element (20), as an oval seal (11), and are preferably molded on.

9. Fluid line structure (1a) according to any one of the preceding claims, **characterized in that** the at least first and second distribution interfaces (3a, 4a) are configured as plug-in parts (30), snap-fit connectors, clamping connectors, bayonet closures, or as other detachable or non-detachable connectors.

10. Fluid line structure (1a) according to any one of the preceding claims, **characterized in that** the at least first and second distribution interfaces (3a, 4a) are configured as sockets, both on the side of the manifold line (2) and on the side of the branch lines (3, 4), for receiving a respective plug-in part (30) configured as a double plug (31/31).

11. Fluid line structure (1a) according to claim 10,
**characterized in that** the plug-in part (30) is, in particular, of lightweight construction and has material recesses (32) at various locations, such as at inclined surfaces for spreading a retaining clip of a mating coupling configured as a socket part and/or for receiving seals (10), said material recesses (32) preferably extending circumferentially and/or in an axially parallel direction.

12. Fluid line structure (1a) according to claim 10 or 11,
**characterized in that** the plug-in part (30) has a predetermined breaking point (33).

13. Fluid line structure (1a) according to any one of claims 10 to 12, **characterized in that** the plug-in part (30) has a coding (34).

14. Temperature-control system (TS), in particular for vehicle batteries, comprising at least one cooling element (20) and at least one fluid line structure (1a, 1b),
**characterized in that** the at least one fluid line structure (1a) is configured according to any one of claims 6 to 13.

15. Temperature-control system (TS) according to claim 14,
**characterized in that** the at least one fluid line structure (1a) is cast together with a battery housing.

16. Plug-in part (30) for a fluid line structure (1a) according to any one of claims 6 to 13,
**characterized by** the features of the characterizing portion of one or more of claims 11 to 13.

## Revendications

1. Bloc connecteur (KB) pour une structure de conduites de fluide (1a) destinée à un système modulaire de régulation thermique (TS) d'un accumulateur d'énergie, notamment pour un système de refroidissement de batteries de véhicule, comprenant au moins une première et une deuxième conduite de dérivation (3, 4) allant d'au moins une conduite collectrice (2) vers un élément de refroidissement (20), pour l'aller du fluide ou pour le retour du fluide, **caractérisé en ce que** les deux conduites de dérivation (3, 4) sont réalisées en forme d'entonnoir et sont disposées obliquement sur l'élément de refroidissement (20), la section transversale respective de ces conduites de dérivation (3, 4), à partir d'une section transversale (A2) située du côté où la conduite de dérivation (3, 4) peut être raccordée à la conduite collectrice (2) au niveau d'une première interface de distribution (3a) ou d'une deuxième interface de distribution (4a), s'élargissant continûment de manière conique jusqu'à une section transversale (A20) située du côté de l'élément de refroidissement (20).

2. Bloc connecteur (KB) selon la revendication 1,
**caractérisé en ce que** les deux conduites de dérivation (3, 4) sont structurellement réunies l'une à l'autre, de préférence y compris leurs première et deuxième interface(s) de distribution (3a, 4a) destinées au raccordement à la conduite collectrice (2) de la structure de conduites de fluide (1a).

3. Bloc connecteur (KB) selon la revendication 1 ou 2,
**caractérisé en ce que** l'augmentation de la section transversale de la conduite de dérivation (3, 4), à partir de la section transversale (A2) située du côté de la conduite collectrice (2) jusqu'à l'obtention d'une section transversale (A20) située du côté de l'élément de refroidissement (20), est de 150 % à 500 %, de préférence de 250 % à 400 %.

4. Bloc connecteur (KB) selon l'une quelconque des revendications 1 à 3, **caractérisé en ce que** la section transversale (A2) de la conduite de dérivation (3, 4) du côté de la conduite collectrice (2) et la section transversale (A20) du côté de l'élément de refroidissement (20) sont situées dans des plans différents, et **en ce que** la ou les conduite(s) de dérivation (3, 4) présentent un tracé incliné par rapport à ces plans, qui s'écarte d'une déviation d'écoulement à angle droit, un angle (α) entre l'axe médian (Y-Y) de la conduite de dérivation (3, 4) et l'axe médian (X-X) d'une interface de distribution associée (3a, 4a) étant notamment compris entre 10° et 60°, de préférence entre 20° et 35°.

5. Bloc connecteur (KB) selon l'une quelconque des revendications 1 à 4, **caractérisé par** des nervures de renforcement (12) qui sont disposées, notamment sur une face supérieure et/ou une face inférieure du bloc connecteur (KB), en différents endroits, de préférence sous la forme de nervures de renforcement (12) s'étendant radialement à partir du centre respectif de la ou des conduite(s) de dérivation (3, 4).

6. Structure de conduites de fluide (1a) destinée à un système modulaire de régulation thermique (TS) d'un accumulateur d'énergie, notamment à un système de refroidissement de batteries de véhicule, comprenant au moins une conduite collectrice (2) pour le fluide ainsi qu'au moins une première conduite de dérivation (3) et au moins une deuxième conduite de dérivation (4) menant à un élément de refroidissement (20) creux, en forme de plaque et traversé par le fluide, ainsi qu'au moins une première interface de distribution (3a) et une deuxième interface de distribution (4a) pour le raccordement respectif des conduites de dérivation (3, 4) à la conduite collectrice (2), **caractérisée en ce que** l'une des conduites de dérivation (3) est conçue pour l'aller du fluide et l'autre conduite de dérivation (4) pour le retour du fluide, les conduites de dérivation (3, 4) étant réalisées en forme d'entonnoir et disposées obliquement sur l'élément de refroidissement (20), la section transversale (A2) des conduites de dérivation (3, 4), à partir de la première interface de distribution (3a) ou de la deuxième interface de distribution (4a) de la conduite collectrice (2), s'élargissant continûment de manière conique jusqu'au raccordement à la section transversale (A20) de l'élément de refroidissement (20) creux, en forme de plaque et traversé par le fluide, au moins lesdites première et deuxième conduites de dérivation (3, 4), y compris leurs première et deuxième interface(s) de distribution (3a, 4a), étant structurellement réunies l'une à l'autre dans un bloc connecteur (KB) selon l'une quelconque des revendications 1 à 5.

7. Structure de conduites de fluide (1a) selon la revendication 6, **caractérisée en ce que** la conduite collectrice (2) présente une section transversale moyenne sensiblement constante.

8. Structure de conduites de fluide (1a) selon l'une quelconque des revendications précédentes,
**caractérisée en ce que** des joints d'étanchéité (10, 11) sont disposés au niveau des interfaces de distribution (3a, 4a), les joints d'étanchéité (10, 11) étant chacun réalisés sous la forme d'un joint torique (10) ou, notamment dans la région de l'élément de refroidissement (20), sous la forme d'un joint ovale (11), et étant de préférence moulés.

9. Structure de conduites de fluide (1a) selon l'une quelconque des revendications précédentes,
**caractérisée en ce que** les au moins première et deuxième interfaces de distribution (3a, 4a) sont réalisées sous la forme d'éléments enfichables (30), de connecteurs à encliquetage, de connecteurs de serrage, de fermetures à baïonnette ou d'autres connecteurs amovibles ou non amovibles.

10. Structure de conduites de fluide (1a) selon l'une quelconque des revendications précédentes,
**caractérisée en ce que** les au moins première et deuxième interfaces de distribution (3a, 4a) sont réalisées sous la forme de douilles, aussi bien du côté de la conduite collectrice (2) que du côté des conduites de dérivation (3, 4), pour recevoir chacune un élément enfichable (30) réalisé sous la forme d'un double connecteur mâle (31/31).

11. Structure de conduites de fluide (1a) selon la revendication 10, **caractérisée en ce que** l'élément enfichable (30) est notamment réalisé selon une construction allégée et présente, à différents endroits, tels que sur des surfaces inclinées destinées à écarter une agrafe de retenue d'un contre-accouplement réalisé sous la forme d'une partie formant douille et/ou destinées à recevoir des joints d'étanchéité (10), des évidements de matière (32), lesquels s'étendent de préférence dans la direction circonférentielle et/ou dans une direction parallèle à l'axe.

12. Structure de conduites de fluide (1a) selon la revendication 10 ou 11, **caractérisée en ce que** l'élément enfichable (30) présente un point de rupture prédéterminé (33).

13. Structure de conduites de fluide (1a) selon l'une quelconque des revendications 10 à 12,
**caractérisée en ce que** l'élément enfichable (30) présente un codage (34).

14. Système de régulation thermique (TS), notamment pour des batteries de véhicule, comprenant au moins un élément de refroidissement (20) et au moins une structure de conduites de fluide (1a, 1b),
**caractérisé en ce que** ladite au moins une structure de conduites de fluide (1a) est réalisée selon l'une quelconque des revendications 6 à 13.

15. Système de régulation thermique (TS) selon la revendication 14, **caractérisé en ce que** ladite au moins une structure de conduites de fluide (1a) est coulée conjointement avec un boîtier de batterie.

16. Élément enfichable (30) pour une structure de conduites de fluide (1a) selon l'une quelconque des revendications 6 à 13,
**caractérisé par** les caractéristiques de la partie caractérisante d'une ou de plusieurs des revendications 11 à 13.
